# EUROPEAN PATENT SPECIFICATION

(11) **EP 1 791 099 B1**
(45) Date of publication and mention of the grant of the patent: **16.03.2011**
(21) Application number: 05257227.8
(22) Date of filing: 23.11.2005
(51) Int. Cl.: H04W 4/22, H04W 12/06

(54) **Notification of a received message in a wireless mobile communication device based upon authentication**
Authentifizierungsbasierte Benachrichtigung bezüglich einer empfangenen Nachricht in einem drahtlosen mobilen Kommunikationsgerät
Notification d'un message reçu dans un dispositif de communication mobile sans fil basée sur authentification

(43) Date of publication of application: 30.05.2007
(73) Proprietor: RESEARCH IN MOTION LIMITED, Waterloo, Ontario N2L 3W8 (CA)
(72) Inventor: Harris, Ian, Devizes, Wiltshire SN10 2LD (GB)
(74) Representative: Hibbert, Juliet Jane Grace

(56) References cited:
- EP-A- 1 362 712
- WO-A-2005/020593
- WO-A-2005/079421
- FR-A- 2 869 178
- US-A- 6 842 628
- US-A- 2002 087 862
- US-A- 2003 069 002
- US-A1- 2004 103 158
- US-A1- 2005 020 289

## Description

### FIELD OF THE INVENTION

The present invention generally relates to mobile communication, and more specifically to a method and an apparatus for providing a notification of a received message based upon authentication of the received message in a wireless mobile communication device.

### BACKGROUND OF THE INVENTION

In today's wireless mobile communication systems, a user of a mobile wireless communication device can often communicate by sending and receiving Short Messages through Short Message Service ("SMS"). For certain types of wireless mobile communication devices, such messaging services as Cell Broadcast Service ("CBS") and Multimedia Messaging Service ("MMS") may also be available. In case of a national emergency or local emergency such as a hurricane or tornado, the above mentioned messaging services may be employed by an appropriate authority to reach and notify the affected public having such wireless devices. At the same time, for the wireless device users, there is a risk of receiving falsified emergency messages or simply unwanted messages such as spam messages.

US-A-20050020289 discloses a method for blocking SMS spam messages if a spam-blocking option is set and an associated phone number corresponds to a received message present in a spam-blocking database. US-B-6842628 discloses a method for transmitting verified notification messages from a service provider wherein users are registered and provided with respective public and private encryption keys.

Moreover, document WO 2005/020593 A2 teaches an overriding function at a wireless device which, when a base station broadcasts a broadcast message with an emergency status indicator indicative of the associated broadcast message being an emergency message, is activated in the wireless portable communication device. The overriding function is designed to override or bypass the user selected message handling setting such that the broadcast message is received, and the contents of the broadcast message are communicated without delay.

The invention is set out in the independent claims 1, 7 and 13.

### BRIEF DESCRIPTION OF THE DRAWINGS

FIG. 1 is an exemplary block diagram of a wireless communication network in which a wireless mobile communication device in accordance with at least one of the preferred embodiments may be practiced;
FIG. 2 is an exemplary flowchart illustrating the process in a wireless mobile communication device for providing a notification of a received message in accordance with at least one of the preferred embodiments;
FIG. 3 is an exemplary block diagram of a wireless mobile communication device configured to provide a notification of an authenticated received message in accordance with at least one of the preferred embodiments; and
FIG. 4 is an exemplary flowchart illustrating the process in a wireless communication network for providing a notification to a wireless mobile communication device of a received message in accordance with at least one of the preferred embodiments.

### SUMMARY

A wireless mobile communication device receives a message, which is designed to reach as many subscribers as possible in a targeted area. The message may be urgent in nature, such as a natural disaster in the targeted area or other emergency situations which the general public in the vicinity needs to be made aware of. Such an emergency message may be provided through messaging services such as the Short Message Services ("SMS"), Cell Broadcast Service ("CBS") and Multimedia Messaging Service ("MMS"). To avoid notifying the user of the wireless mobile communication device if the message is falsified or a spam, the wireless mobile communication device evaluates the authenticity of the received message. If the received message is authenticated, then the wireless mobile communication device provides a notification that an urgent message has been received. Although a mechanism, known as Message Class zero, exists in SMS and CBS specifications to indicate to the wireless mobile communication device that a particular received short message should be displayed immediately, the user of the mobile device can override the Message Class Zero setting, allowing the mobile device not to have such messages displayed immediately. To provide an immediate notification of an emergency message, the wireless mobile communication device may override the user setting to provide an immediate notification upon authenticating the received message.

### DETAIL DESCRIPTION OF THE PREFERRED EMBODIMENTS

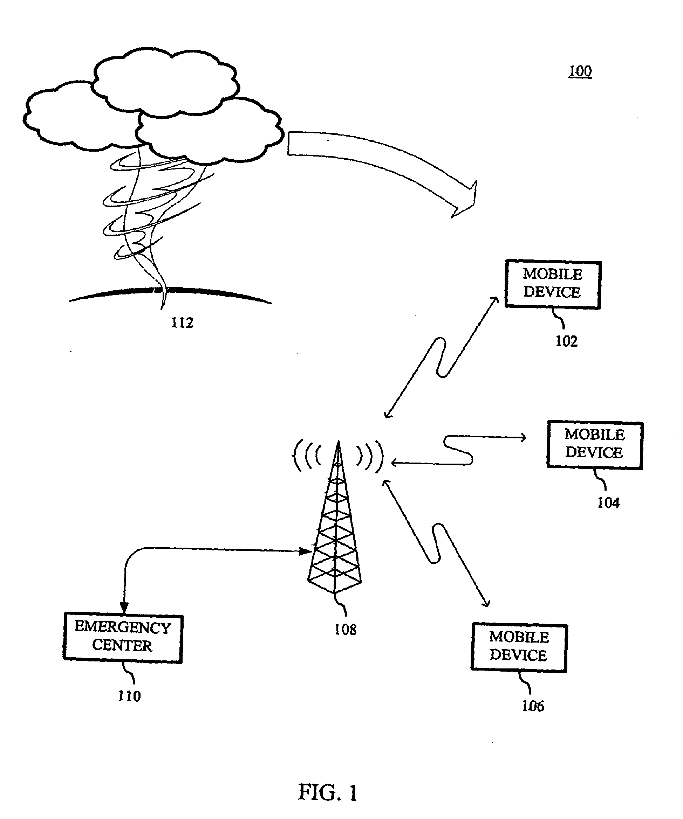

FIG. 1 is an exemplary block diagram of a wireless communication network 100 in which a wireless mobile communication device ("mobile device") 102 in accordance with at least one of the preferred embodiments may be practiced. The wireless communication network 100 is shown to have a plurality of mobile devices (three mobile devices 102, 104, and 106 are shown for simplicity), which are capable of wirelessly communicating with a fixed base station 108. The fixed base station 108 is connected to an emergency center 110, such as police, fire department, local government, or any agency having authority to provide a wide area notification of situations of the public concern such as a tornado 112 approaching the mobile devices 102, 104, and 106.

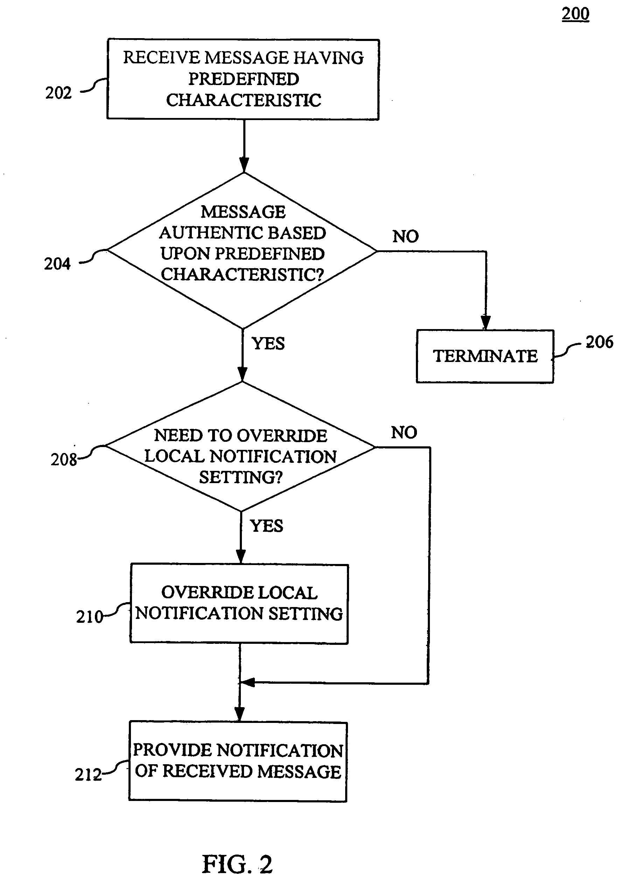

FIG. 2 is an exemplary flowchart 200 illustrating the process in the mobile device 102 for providing a notification of a received message in accordance with at least one of the preferred embodiments. In block 202, the mobile device 102, which is registered in the wireless communication network 100, receives a message having a predefined characteristic. The predefined characteristic may be a digital signature provided by the message originator, a predefined bit set by the message originator, or any other mechanism that can be used by the mobile device 102 to determine the authenticity of the message. The message may be urgent in nature, such as a warning of the tornado 112 approaching, requiring an immediate attention of the user of the mobile device 102, and may be a CBS message, a MMS message, an SMS message, or any message that is configured to reach a plurality of mobile devices registered in the wireless communication network 100. To avoid notifying the user of the mobile device 102 of falsified or spam type of unauthorized messages, the mobile device 102 evaluates authenticity of the received message based upon the predefined characteristic in block 204. If the mobile device 102 is unable to authenticate the received message in block 204, meaning that the received message originated from a source unauthorized to utilize such a wide transmission method, then the process terminates in block 206. However, if the received message is authenticated in block 204, meaning that the urgency of the received message is genuine, the mobile device 102 determines in block 208 whether a local notification setting, such as the Message Class Zero setting, of the mobile device 102 needs to be overridden in order to provide an immediate notification of the received message. If the local notification setting needs to be overridden, the mobile device 102 overrides the local notification setting in block 210, and provides an immediate notification of the authenticated received message in block 212. If the local notification setting is determined not needing to be overridden, the mobile device 102 provides an immediate notification of the authenticated received message in block 212. The notification of the received message provided by the mobile device 102 may be any one of various types of notifications including a visual notification such as an indicator light turning on or flashing, an audible notification such as an alert being activated, a motional notification such as the mobile device 102 vibrating, and the displaying of the authenticated received message.

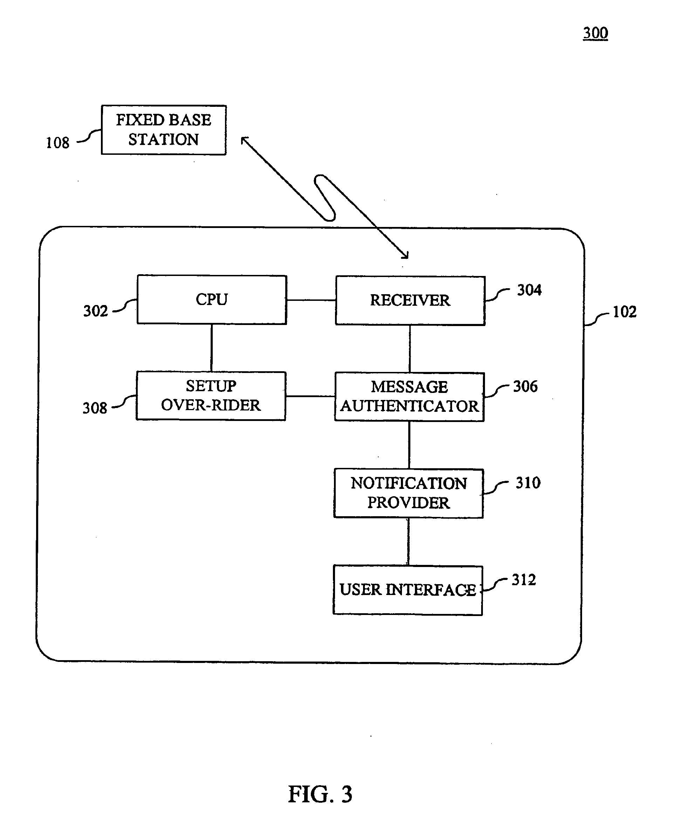

FIG. 3 is an exemplary block diagram 300 of the mobile device 102 configured to provide a notification of an authenticated received message in accordance with at least one of the preferred embodiments. The mobile device 102 has a central processing unit ("CPU") 302, which is configured to control overall functionality of the mobile device 102, including a local notification setting of the mobile device 102 such as the Message Class Zero setting, which allows a delayed notification of the received message. A receiver 304 is coupled to the CPU 302, and is configured to receive a message having a predefined characteristic from the fixed base station 108. A message authenticator 306 is coupled to the receiver 304, and is configured to evaluate authenticity of the received message based upon the predefined characteristic. As previously described, the predefined characteristic may be any mechanism that can be used by the mobile device 102 to determine the authenticity of the message, and the message may be urgent in nature requiring an immediate attention of the user of the mobile device 102, and may be any message that is configured to reach a plurality of mobile devices registered in the wireless communication network 100. A setup over-rider 308 is coupled to the CPU 302 and the message authenticator 306, and is configured to override the local notification setting of the mobile device 102 if the received message is authenticated. A notification provider 310 is coupled to the message authenticator 306, and is configured to provide a notification of the received message if the received message is authenticated. By overriding the local notification setting by the setup over-rider 308, the notification provider 310 is capable of immediately providing the notification of the received message upon the authentication of the received message. The notification of the received message provided by the notification provider 310 in the mobile device 102 may be any one of various types of notifications including a visual notification such as an indicator light turning on or flashing, an audible notification such as an alert being activated, a motional notification such as the mobile device 102 vibrating, and the displaying of the authenticated received message.

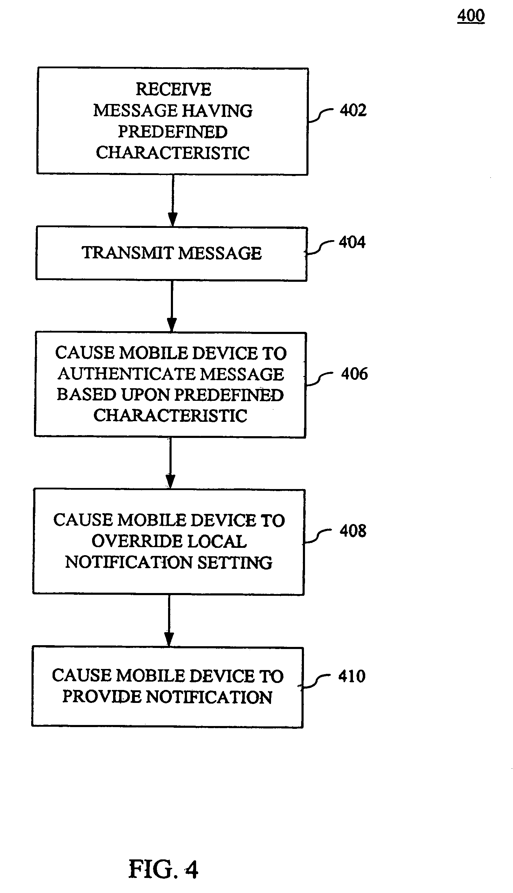

FIG. 4 is an exemplary flowchart 400 illustrating the process in the wireless communication network 100 for providing a notification to the mobile device 102 of a received message in accordance with at least one of the preferred embodiments. In block 402, the wireless communication network 100 receives a message having a predefined characteristic, which provides authenticity of the message, from the emergency center 110. The emergency center 110 may be police, fire department, local government, or any agency having authority to provide a wide area notification of situations of the public concern such as a tornado 112 approaching the mobile devices 102, 104, and 106. The message may be a CBS message, a MMS message, an SMS message, or any message that is configured to reach a plurality of mobile devices registered in the wireless communication network 100. In block 404, the wireless communication network 100 transmits the message through the fixed base station 108. The message causes the mobile device 102, which receives the message, to authenticate the message based upon the predefined characteristic in block 406. In block 408, the message further causes the mobile device 102 to override a local notification setting, such as the Message Class Zero setting, upon authenticating the message, and causes the mobile device 102 to immediately provide a notification of the message upon authenticating the message in block 410. The notification of the message may be any one of various types of notifications including a visual notification such as an indicator light turning on or flashing, an audible notification such as an alert being activated, a motional notification such as the mobile device 102 vibrating, and the displaying of the authenticated received message.

While the preferred embodiments of the invention have been illustrated and described, it is to be understood that the invention is not so limited. Numerous modifications, changes, variations, substitutions and equivalents will occur to those skilled in the art without departing from the scope of the present invention as defined by the appended claims.

## Claims

1. A method in a wireless mobile communication device (102) registered in a wireless communication network and including a process for providing a notification of an emergency message **characterized by**:
receiving, via the wireless communication network, an emergency message which is broadcasted over a wide area using a cell broadcast service "CBS" to reach a plurality of wireless mobile communication devices (102, 104, 106) registered in the wireless communication network, the emergency message having a digital signature provided by an emergency center (110) which is the originator of the message, the emergency center (110) being police, fire department, or local government;
evaluating authenticity of the emergency message based upon the digital signature in the message, for identifying whether the message is authentic;
if the emergency message is authenticated based upon the digital signature, and it is determined that a local notification setting of the wireless mobile communication device (102) which allows for delayed notification needs to be overridden: overriding the local notification setting and immediately providing a notification of the message at the wireless mobile communication device (102); and
if the emergency message is unable to be authenticated based upon the digital signature, which indicates that the message originated from a source unauthorized to provide the wide area notification: terminating the process instead of overriding the local notification setting, if the local notification setting needs to be overridden, and immediately providing the notification of the message.

2. The method of claim 1, wherein the message is a short message service "SMS" message.

3. The method of any one of claims 1 or 2, wherein the act of evaluating authenticity is further based upon a predefined bit included in the emergency message.

4. The method of any one of claims 1, 2, or 3, wherein the local notification setting is a Message Class Zero setting.

5. The method of any one of claims 1, 2, 3, or 4, wherein the emergency center (110) is for the police.

6. The method of any one of claims 1, 2, 3, 4 or 5, wherein immediately providing the notification of the emergency message includes at least one of:
providing a visual notification,
providing an audible notification,
providing a motional notification, and
displaying the emergency message.

7. A wireless mobile communication device (102) configured to register in a wireless communication network and configured with a process to provide a notification of an emergency message received via the wireless communication network, the wireless mobile communication device (102) **characterized by**:
a receiver (304) configured to receive, via the wireless communication network, an emergency message which is broadcasted over a wide area using a cell broadcast service "CBS" of the wireless communication network to reach a plurality of wireless mobile communication devices (102, 104, 106) registered in the wireless communication network, the emergency message having a digital signature provided by an emergency center (110) which is the originator of the message, the emergency center (110) being police, fire department, or local government;
a message authenticator (306) coupled to the receiver (304), the message authenticator (306) configured to evaluate authenticity of the emergency message based upon the digital signature of the message, for identifying whether the message is authentic;
a setup over-rider (308) coupled to the message authenticator (306), the setup over-rider 308 configured to, if the message is authenticated based upon the digital signature, override a local notification setting which allows for delayed notification;
a notification provider (310) coupled to the message authenticator (306), the notification provider (310) configured to immediately provide a notification of the emergency message if the message is authenticated based upon the digital signature and the local notification setting is overridden; and
wherein the wireless mobile communication device (102) operates to terminate the process instead of overriding the local notification setting, if the local notification setting needs to be overridden, and immediately providing the notification of the message if the message is unable to be authenticated based upon the digital signature, which indicates that the message originated from a source unauthorized to provide the wide area notification.

8. The wireless mobile communication device (102) of claim 7, wherein the message authenticator (306) is further configured to evaluate authenticity of the message based upon a predefined bit included in the emergency message.

9. The wireless mobile communication device (102) of any one of claims 7 or 8, wherein the emergency center (110) is for the police.

10. The wireless mobile communication device (102) of any one of claims 7, 8 or 9, wherein the message is a short message service "SMS" message.

11. The wireless mobile communication device (102) of any one of claims 7, 8, 9, or 10, wherein the local notification setting is a Message Class Zero setting.

12. The wireless mobile communication device (102) of any one of claims 7, 8, 9, 10, or 11, wherein the notification of the emergency message includes at least one of the following immediately provided at the wireless mobile communication device (102):
a visual notification,
an audible notification,
a motional notification, and
the emergency message displayed on a display of the wireless mobile communication device (102).

13. A method in a wireless communication network for communicating an emergency message to a wireless mobile communication device (102), the wireless mobile communication device (102) being registered in the wireless communication network and having a process for providing a notification of the emergency message, the method being **characterized by**:
receiving, at the wireless communication network, an emergency message from an emergency center (110), the emergency message having a digital signature provided by the emergency center (110) which is the originator of the message, the emergency center (110) being police, fire department, or local government;
broadcasting, using a cell broadcast service "CBS" of the wireless communication network, the emergency message having the digital signature provided by the emergency center (110) to reach a plurality of wireless mobile communication devices (102, 104, 106) registered in the wireless communication network;
causing the wireless mobile communication device (102) receiving the emergency message to authenticate the message based upon the digital signature, for identifying whether the message is authentic;
causing the wireless mobile communication device (102) to, upon authenticating the message based upon the digital signature, override a local notification setting of the wireless mobile communication device (102) which allows for delayed notification and immediately provide a notification of the emergency message at the wireless mobile communication device (102); and
causing the wireless mobile communication device (102) to, upon being unable to authenticate the message based upon the digital signature which indicates that the message originated from a source unauthorized to provide the wide area notification, terminate the process instead of overriding the local notification setting, if the local notification setting needs to be overridden, and immediately providing the notification of the message.

14. The method of claim 13, wherein the message is a short message service "SMS" message.

15. The method of any one of claims 13 or 14, wherein the emergency center (110) is for the police.

16. The method of any one of claims 13, 14, or 15, the local notification setting is a Message Class Zero setting.

17. The method of any one of claims 13, 14, 15, or 16, wherein the notification of the emergency message which is immediately provided upon authenticating the message includes at least one of:
a visual notification,
an audible notification,
a motional notification, and
the emergency message displayed on a display of the wireless mobile communication device (102).

## Patentansprüche

1. Verfahren in einer drahtlosen mobilen Kommunikationsvorrichtung (102), die in einem drahtlosen Kommunikationsnetzwerk registriert ist und einen Prozess umfasst zum Vorsehen einer Benachrichtigung über eine Notfallnachricht, das **gekennzeichnet ist durch**:
Empfangen, über das drahtlose Kommunikationsnetzwerk, einer Notfallnachricht, die über einen weiten Bereich unter Verwendung eines Zell-Broadcast-Dienstes (CBS - cell broadcast service) gesendet (broadcast) wird, um eine Vielzahl von drahtlosen mobilen
Kommunikationsvorrichtungen (102, 104, 106) zu erreichen, die in dem drahtlosen Kommunikationsnetzwerk registriert sind, wobei die Notfallnachricht eine digitale Signatur hat, die von einem Notfallzentrum (110) vorgesehen ist, das der Absender der Nachricht ist, wobei das Notfallzentrum (110) die Polizei, die Feuerwehr oder die lokale Verwaltung ist;
Evaluieren einer Authentizität der Notfallnachricht basierend auf der digitalen Signatur in der Nachricht zum Identifizieren, ob die Nachricht authentisch ist;
wenn die Nachricht basierend auf der digitalen Signatur authentifiziert ist, und bestimmt ist, dass eine lokale Benachrichtigungseinstellung der drahtlosen mobilen Kommunikationsvorrichtung (102), die eine verzögerte Benachrichtigung ermöglicht, aufgehoben werden muss: Aufheben der lokalen Benachrichtigungseinstellung und unmittelbares Liefern einer Benachrichtigung über die Nachricht an der drahtlosen mobilen Kommunikationsvorrichtung (102); und
wenn die Notfallnachricht nicht authentifiziert werden kann basierend auf der digitalen Signatur, die anzeigt, dass die Nachricht von einer Quelle stammt, die nicht autorisiert ist, die Weitbereichsbenachrichtigung zu liefern: Beenden des Prozesses anstatt eines Aufhebens der lokalen Benachrichtigungseinstellung, wenn die lokale
Benachrichtigungseinstellung aufgehoben werden muss, und unmittelbaren Lieferns einer Benachrichtigung über die Nachricht.

2. Verfahren gemäß Anspruch 1, wobei die Nachricht eine Kurznachrichtendienst(SMS-Short Message Service)-Nachricht ist.

3. Verfahren gemäß einem der Ansprüche 1 oder 2, wobei der Vorgang eines Evaluierens einer Authentizität weiter auf einem vordefinierten Bit basiert, das in der Notfallnachricht enthalten ist.

4. Verfahren gemäß einem der Ansprüche 1, 2 oder 3, wobei die lokale Benachrichtigungseinstellung eine "Nachrichtenklasse Null"-Einstellung ist.

5. Verfahren gemäß einem der Ansprüche 1, 2, 3 oder 4, wobei das Notfallzentrum (110) für die Polizei ist.

6. Verfahren gemäß einem der Ansprüche 1, 2, 3, 4 oder 5, wobei ein unmittelbares Liefern der Benachrichtigung über die Notfallnachricht zumindest eines umfasst:
Liefern einer visuellen Benachrichtigung,
Liefern einer hörbaren Benachrichtigung,
Liefern einer Bewegungsbenachrichtigung, und
Anzeigen der Notfallnachricht.

7. Drahtlose mobile Kommunikationsvorrichtung (102), die konfiguriert ist, sich in einem drahtlosen Kommunikationsnetzwerk zu registrieren, und mit einem Prozess konfiguriert ist, um eine Benachrichtigung über eine Notfallnachricht zu liefern, die über das drahtlose Kommunikationsnetzwerk empfangen wird, wobei die drahtlose mobile Kommunikationsvorrichtung (102) **gekennzeichnet ist durch**:
einen Empfänger (304), der konfiguriert ist zum Empfangen, über das drahtlose Kommunikationsnetzwerk, einer Notfallnachricht, die über einen weiten Bereich unter Verwendung eines Zell-Broadcast-Dienstes (CBS - cell broadcast service) des drahtlosen Kommunikationsnetzwerks gesendet (broadcast) wird, um eine Vielzahl von drahtlosen mobilen Kommunikationsvorrichtungen (102, 104, 106) zu erreichen, die in dem drahtlosen Kommunikationsnetzwerk registriert sind, wobei die Notfallnachricht eine digitale Signatur hat, die von einem Notfallzentrum (110) vorgesehen ist, das der Absender der Nachricht ist, wobei das Notfallzentrum (110) die Polizei, die Feuerwehr oder die lokale Verwaltung ist;
einen Nachricht-Authentifikator (306), der mit dem Empfänger (304) verbunden ist, wobei der Nachricht-Authentifikator (306) konfiguriert ist zum Evaluieren einer Authentizität der Notfallnachricht basierend auf der digitalen Signatur der Nachricht zum Identifizieren, ob die Nachricht authentisch ist;
einen Einstellungsaufheber (308), der mit dem Nachricht-Authentifikator (306) verbunden ist, wobei der Einstellungsaufheber (308) konfiguriert ist, wenn die Nachricht basierend auf der digitalen Signatur authentifiziert ist, zum Aufheben einer lokalen Benachrichtigungseinstellung, die eine verzögerte Benachrichtigung ermöglicht;
einen Benachrichtigungs-Lieferer (310), der mit dem Nachricht-Authentifikator (306) verbunden ist, wobei der Benachrichtigungs-Lieferer (310) konfiguriert ist zum unmittelbaren Liefern einer Benachrichtigung über die Notfallnachricht, wenn die Nachricht authentifiziert wird basierend auf der digitalen Signatur und die lokale Benachrichtigungseinstellung aufgehoben ist; und
wobei die drahtlose mobile Kommunikationsvorrichtung (102) arbeitet zum Beenden des Prozesses anstatt eines Aufhebens der lokalen Benachrichtigungseinstellung, wenn die lokale
Benachrichtigungseinstellung aufgehoben werden muss, und
unmittelbaren Lieferns der Benachrichtigung über die Nachricht, wenn die Nachricht nicht authentifiziert werden kann basierend auf der digitalen Signatur, die anzeigt, dass die Nachricht von einer Quelle stammt, die nicht autorisiert ist, die Weitbereichsbenachrichtigung zu liefern.

8. Drahtlose mobile Kommunikationsvorrichtung (102) gemäß Anspruch 7, wobei der Nachricht-Authentifikator (306) weiter konfiguriert ist zum Evaluieren einer Authentizität der Nachricht basierend auf einem vordefinierten Bit, das in der Notfallnachricht enthalten ist.

9. Drahtlose mobile Kommunikationsvorrichtung (102) gemäß einem der Ansprüche 7 oder 8, wobei das Notfallzentrum (110) für die Polizei ist.

10. Drahtlose mobile Kommunikationsvorrichtung (102) gemäß einem der Ansprüche 7, 8 oder 9, wobei die Nachricht eine Kurznachrichtendienst(SMS-Short Message Service)-Nachricht ist.

11. Drahtlose mobile Kommunikationsvorrichtung (102) gemäß einem der Ansprüche 7, 8, 9 oder 10, wobei die lokale Benachrichtigungseinstellung eine "Nachrichtenklasse Null"-Einstellung ist.

12. Drahtlose mobile Kommunikationsvorrichtung (102) gemäß einem der Ansprüche 7, 8, 9, 10 oder 11, wobei die Benachrichtigung über die Notfallnachricht zumindest eines der Folgenden umfasst, unmittelbar geliefert an der drahtlosen mobilen Kommunikationsvorrichtung (102):
eine visuelle Benachrichtigung,
eine hörbare Benachrichtigung,
eine Bewegungsbenachrichtigung, und
die Notfallnachricht, die auf einer Anzeige der drahtlosen mobilen Kommunikationsvorrichtung (102) angezeigt wird.

13. Verfahren in einem drahtlosen Kommunikationsnetzwerk zum Kommunizieren einer Notfallnachricht an eine drahtlose mobile Kommunikationsvorrichtung (102), wobei die drahtlose mobile Kommunikationsvorrichtung (102) in dem drahtlosen Kommunikationsnetzwerk registriert ist und einen Prozess hat zum Liefern einer Benachrichtigung über die Notfallnachricht, wobei das Verfahren **gekennzeichnet ist durch**:
Empfangen, an dem drahtlosen Kommunikationsnetzwerk, einer Notfallnachricht von einem Notfallzentrum (110), wobei die Notfallnachricht eine digitale Signatur hat, die von dem Notfallzentrum (110) vorgesehen ist, das der Absender der Nachricht ist, wobei das Notfallzentrum (110) die Polizei, die Feuerwehr oder die lokale Verwaltung ist;
Senden (broadcasting), unter Verwendung eines Zell-Broadcast-Dienstes (CBS - cell broadcast service) des drahtlosen Kommunikationsnetzwerks, der Notfallnachricht, die die digitale Signatur hat, die von dem Notfallzentrum (110) vorgesehen ist, um eine Vielzahl von drahtlosen mobilen Kommunikationsvorrichtungen (102, 104, 106) zu erreichen, die in dem drahtlosen Kommunikationsnetzwerk registriert sind;
Veranlassen, dass die drahtlose mobile Kommunikationsvorrichtung (102), die die Notfallnachricht empfängt, die Nachricht authentifiziert basierend auf der digitalen Signatur zum Identifizieren, ob die Nachricht authentisch ist;
Veranlassen, dass die drahtlose mobile Kommunikationsvorrichtung (102), wenn die Nachricht basierend auf der digitalen Signatur authentifiziert ist, eine lokale Benachrichtigungseinstellung der drahtlosen mobilen Kommunikationsvorrichtung (102) aufhebt, die eine verzögerte Benachrichtigung ermöglicht, und unmittelbar eine Benachrichtigung über die Notfallnachricht an der drahtlosen mobilen Kommunikationsvorrichtung (102) vorsieht; und
Veranlassen, dass die drahtlose mobile Kommunikationsvorrichtung (102), wenn die Nachricht nicht authentifiziert werden kann basierend auf der digitalen Signatur, die anzeigt, dass die Nachricht von einer Quelle stammt, die nicht autorisiert ist, die Weitbereichsbenachrichtigung zu liefern, den Prozess beendet anstatt die lokale Benachrichtigungseinstellung aufzuheben, wenn die lokale Benachrichtigungseinstellung aufgehoben werden muss, und unmittelbar die Benachrichtigung über die Nachricht zu liefern.

14. Verfahren gemäß Anspruch 13, wobei die Nachricht eine Kurznachrichtendienst(SMS - Short Message Service)-Nachricht ist.

15. Verfahren gemäß einem der Ansprüche 13 oder 14, wobei das Notfallzentrum (110) für die Polizei ist.

16. Verfahren gemäß einem der Ansprüche 13, 14 oder 15, wobei die lokale Benachrichtigungseinstellung eine "Nachrichtenklasse Null"-Einstellung ist.

17. Verfahren gemäß einem der Ansprüche 13, 14, 15 oder 16, wobei die Benachrichtigung über die Notfallnachricht, die bei einem Authentifizieren der Nachricht unmittelbar geliefert wird, zumindest eines aufweist aus:
einer visuellen Benachrichtigung,
einer hörbaren Benachrichtigung,
einer Bewegungsbenachrichtigung, und
der Notfallnachricht, die auf einer Anzeige der drahtlosen mobilen Kommunikationsvorrichtung (102) angezeigt wird.

## Revendications

1. Procédé, sur un dispositif de communication mobile sans fil (102) enregistré auprès d'un réseau de communication sans fil et comprenant un processus destiné à fournir une notification d'un message d'urgence, **caractérisé par** les étapes consistant à :
recevoir, via le réseau de communication sans fil, un message d'urgence qui est diffusé généralement sur une vaste zone à l'aide d'un service de diffusion générale cellulaire, CBS pour « *Cell Broadcast Service* », afin d'atteindre une pluralité de dispositifs de communication mobiles sans fil (102, 104, 106) enregistrés auprès du réseau de communication sans fil, le message d'urgence comprenant une signature numérique fournie par un centre d'urgence (110) qui est à l'origine du message, le centre d'urgence (110) étant soit la police, soit les pompiers, soit une administration locale ;
évaluer l'authenticité du message d'urgence sur la base de la signature numérique dans le message, afin de déterminer si le message est ou non authentique ;
si le message d'urgence est authentifié en fonction de la signature numérique et s'il est déterminé qu'un paramètre local de notification du dispositif de communication mobile sans fil (102) permettant la notification retardée doit être outrepassé : outrepasser le paramètre local de notification et fournir immédiatement une notification du message au dispositif de communication mobile sans fil (102) ; et
si le message d'urgence ne peut pas être authentifié en fonction de la signature numérique, ce qui indique que le message provient d'une source qui n'est pas autorisée à fournir la notification sur une vaste zone : mettre un terme au processus au lieu d'outrepasser le paramètre local de notification, si le paramètre local de notification doit être outrepassé, et de fournir immédiatement la notification du message.

2. Procédé selon la revendication 1, dans lequel le message est un message du service de messages courts, SMS.

3. Procédé selon l'une quelconque des revendications 1 et 2, dans lequel l'étape d'évaluation de l'authenticité se fonde également sur un bit prédéterminé inclus dans le message d'urgence.

4. Procédé selon l'une quelconque des revendications 1, 2 et 3, dans lequel le paramètre local de notification est un paramètre de message de classe zéro.

5. Procédé selon l'une quelconque des revendications 1, 2, 3, et 4, dans lequel le centre d'urgence (110) est la police.

6. Procédé selon l'une quelconque des revendications 1, 2, 3, 4 et 5, dans lequel la fourniture immédiate d'une notification du message d'urgence comprend au moins un des aspects suivants :
fournir une notification visuelle ;
fournir une notification sonore ;
fournir une notification cinétique ; et
afficher le message d'urgence.

7. Dispositif de communication mobile sans fil (102), configuré pour s'enregistrer auprès d'un réseau de communication sans fil et configuré avec un processus destiné à fournir une notification d'un message d'urgence reçu via le réseau de communication sans fil, le dispositif de communication mobile sans fil (102) étant **caractérisé par** :
un récepteur (304), configuré pour recevoir, via le réseau de communication sans fil, un message d'urgence qui est diffusé généralement sur une vaste zone à l'aide d'un service de diffusion générale cellulaire, CBS, du réseau de communication sans fil afin d'atteindre une pluralité de dispositifs de communication mobiles sans fil (102, 104, 106) enregistrés auprès du réseau de communication sans fil, le message d'urgence comprenant une signature numérique fournie par un centre d'urgence (110) qui est à l'origine du message, le centre d'urgence (110) étant soit la police, soit les pompiers, soit une administration locale ;
un authentificateur de message (306), couplé au récepteur (304), l'authentificateur de message (306) étant configuré pour évaluer l'authenticité du message d'urgence sur la base de la signature numérique dans le message, afin de déterminer si le message est ou non authentique ;
un moyen d'outrepasser un paramètre (308), couplé à l'authentificateur de message (306), le moyen d'outrepasser un paramètre (308) étant configuré, si le message d'urgence est authentifié en fonction de la signature numérique, pour outrepasser un paramètre local de notification qui autorise une notification retardée ;
un moyen de fourniture de notification (310), couplé à l'authentificateur de message (306), le moyen de fourniture de notification (310) étant configuré pour fournir immédiatement une notification du message d'urgence si le message est authentifié sur la base de la signature numérique et si le paramètre local de notification est outrepassé ; et
dans lequel le dispositif de communication mobile sans fil (102) met un terme au processus au lieu d'outrepasser le paramètre local de notification, si le paramètre local de notification doit être outrepassé, et de fournir immédiatement la notification du message si le message ne peut pas être authentifié sur la base de la signature numérique, ce qui indique que le message provient d'une source qui n'est pas autorisée à fournir la notification sur une zone étendue.

8. Dispositif de communication mobile sans fil (102) selon la revendication 7, dans lequel l'authentificateur de message (306) est configuré en outre pour évaluer l'authenticité du message sur la base d'un bit prédéterminé inclus dans le message d'urgence.

9. Dispositif de communication mobile sans fil (102) selon l'une quelconque des revendications 7 et 8, dans lequel le centre d'urgence (110) est la police.

10. Dispositif de communication mobile sans fil (102) selon l'une quelconque des revendications 7, 8 et 9, dans lequel le message est un message du service de messages courts, SMS.

11. Dispositif de communication mobile sans fil (102) selon l'une quelconque des revendications 7, 8, 9 et 10, dans lequel le paramètre local de notification est un paramètre de message de classe zéro.

12. Dispositif de communication mobile sans fil (102) selon l'une quelconque des revendications 7, 8, 9, 10 et 11, dans lequel la notification du message d'urgence comprend la fourniture immédiate d'au moins une des notifications suivantes sur le dispositif de communication mobile sans fil (102) :
notification visuelle ;
notification sonore ;
notification cinétique ; et
affichage du message d'urgence sur un écran d'affichage du dispositif de communication mobile sans fil (102).

13. Procédé destiné à communiquer un message d'urgence à un dispositif de communication mobile sans fil (102) sur un réseau de communication sans fil, le dispositif de communication mobile sans fil (102) étant enregistré auprès du réseau de communication sans fil et possédant un processus qui fournit une notification du message d'urgence, le procédé étant **caractérisé par** les étapes consistant à :
recevoir sur le réseau de communication sans fil un message d'urgence provenant d'un centre d'urgence (110), le message d'urgence comprenant une signature numérique fournie par le centre d'urgence (110) qui est à l'origine du message, le centre d'urgence (110) étant soit la police, soit les pompiers, soit une administration locale ;
diffuser généralement, à l'aide d'un service de diffusion générale cellulaire CBS du réseau de communication sans fil, le message d'urgence comprenant la signature numérique fournie par le centre d'urgence (110), afin d'atteindre une pluralité de dispositifs de communication mobiles sans fil (102, 104, 106) enregistrés auprès du réseau de communication sans fil ;
commander au dispositif de communication mobile sans fil (102) recevant le message d'urgence d'authentifier le message sur la base de la signature numérique, afin de déterminer si le message est authentique ;
après authentification du message sur la base de la signature numérique, commander au dispositif de communication mobile sans fil (102) d'outrepasser un paramètre local de notification du dispositif de communication mobile sans fil (102) qui autorise une notification retardée et de fournir immédiatement une notification du message d'urgence au dispositif de communication mobile sans fil (102) ; et
après qu'il n'a pas été possible d'authentifier le message sur la base de la signature numérique, ce qui indique que le message provient d'une source qui n'est pas autorisée à fournir la notification sur une vaste zone, commander au dispositif de communication mobile sans fil (102) de mettre un terme au processus au lieu d'outrepasser le paramètre local de notification, si le paramètre local de notification doit être outrepassé, et de fournir immédiatement la notification du message.

14. Procédé selon la revendication 13, dans lequel le message est un message du service de messages courts, SMS.

15. Procédé selon l'une quelconque des revendications 13 et 14, dans lequel le centre d'urgence (110) est la police.

16. Procédé selon l'une quelconque des revendications 13, 14 et 15, dans lequel le paramètre local de notification est un paramètre de message de classe zéro.

17. Procédé selon l'une quelconque des revendications 13, 14, 15 et 16, dans lequel la notification du message d'urgence qui est fournie immédiatement après authentification du message comprend au moins une des notifications suivantes :
notification visuelle ;
notification sonore ;
notification cinétique ; et
affichage du message d'urgence sur un écran d'affichage du dispositif de communication mobile sans fil (102).
